# EUROPEAN PATENT SPECIFICATION

(11) **EP 0 723 070 B1**
(45) Date of publication and mention of the grant of the patent: **16.05.2001**
(21) Application number: 95850232.0
(22) Date of filing: 18.12.1995
(51) Int. Cl.: F01N 7/18, F16L 27/11

(54) **Pipe coupling**
Rohrverbindung
Raccord de tuyaux

(30) Priority: 30.12.1994 SE 9404577
(43) Date of publication of application: 24.07.1996
(73) Proprietor: Scania CV AKTIEBOLAG, 151 87 Södertälje (SE)
(72) Inventor: Östman, Hans, S-141 42 Huddinge (SE)

(56) References cited:
- EP-A- 0 657 673
- US-A- 3 459 444
- US-A- 4 350 372
- US-A- 4 445 332

## Description

The present invention relates to a pipe coupling for a movable and tight connection between an exhaust pipe fastened to a vehicle engine and an exhaust pipe fastened to a vehicle frame.

### State of the art

On heavy vehicles such as trucks, a combustion engine is resiliently mounted on a vehicle frame which consists of two parallel side beams connected to one another by a number of transverse beams. The engine has an exhaust outlet which communicates, via an exhaust line fastened to the engine, with an exhaust line which is fastened to the frame and which in its turn is connected to an exhaust inlet on an exhaust silencer secured to the frame. The exhaust line secured to the engine and the exhaust line secured to the frame are connected to one another by a suitable coupling arrangement. A coupling arrangement commonly used for this purpose includes a flange on each exhaust line, with a number d botted connections for sealingly pressing the flanges to-gether against one another. In another commonly used coupling arrangement the botted connections are replaced by a clamp which has a V-shaped cross-section, grips round the respective flanges and presses the exhaust lines against one another, whereby a tight connection may be obtained.

A known solution for preventing the possibility of exhaust lines parting and for ensuring that the coupling arrangement can maintain a tight connection between the exhaust lines when the engine vibrates, when the length of the lines changes because of engine vibrations or thermal effects or when the frame lurches and twists as the vehicle runs over uneven ground is to mount the exhaust system on rubber mountings capable of allowing necessary mobility in the system.

As rubber mountings for exhaust systems are relatively expensive to manufacture and also have a retatively short service life because they do not satisfactority tolerate great heat or severe cold, some manufacturers have dispensed with them and have instead arranged a corrugated pipe between the exhaust line fastened to the engine and the exhaust line fastened to the frame. In such cases the corrugated pipe is fastened to each exhaust line by botted connections or clamps in the manner previously described and is designed to absorb the movements transmitted to the exhaust system when the engine and the frame move relative to one another. The capacity for absorbing movements then depends on the design of the corrugation and the length of the corrugated pipe. The spacing between the corrugations has to be sufficiently large and they have to be sufficient in number to allow sufficient elongation or shortening of the pipe in the axial direction. The pipe also has to be designed so that its centreline can be displaced laterally when the position of the engine changes relative to the frame. To make this lateral displacement possible, it is in practice necessary to have a retatively long corrugated pipe, since the centreline of the pipe is displaced by the fact that the corrugated pipe does in principle adopt an S shape, a shape which the pipe can only adopt it it is sufficiently long. Problems arise in this respect, since a relatively long corrugated pipe is required for obtaining satisfactory movement absorption in the exhaust system and at the same time a long pipe which adopts an S shape affects the flow resistance and requires a proper amount of space around it to prevent adjacent components from damaging the pipe or to prevent its following the engine when the pipe moves relative to the frame.

As a truck manutacturer has to place a relatively large number of components on a retatively limited space on or near the frame, there Is commonly insufficient space for a long and properly functioning corrugated pipe, so such a pipe has not to any major extent come to be used in exhaust systems. Truck manufacturers have instead continued to use rubber mountings with their attendant disadvantages.

A connector for lines is known from EP-A-0 657 673. The connector however includes a snap-ring whose function is to secure the parts of the connector in their assembled position and do not allow any movement between the parts.

Another connector is known from US-A-4 445 332. This connector allows a limited axial movement between the parts but no twisting or tilting movement.

The present invention relates to a pipe coupling, the object of which is to obviate the previously mentioned disadvantages and make it possible to use a short corrugated pipe or the like in a vehicle exhaust system. To this end, the invention is distinguished by the features indicated in the characterising part of patent claim 1.

The pipe coupling according to the invention uses relatively simple and inexpensive parts and a relatively short pipe for providing a movable but tight coupling between an exhaust pipe fastened to a vehicle engine and an exhaust pipe fastened to a vehicle frame whereby one side of the pipe coupling is provided with a bellows capable of being connected to a pipe and the other side of the pipe coupling is provided with a sleeve which surrounds the end of the bellows, can be connected to a pipe and requires retatively little space for it to function in an exemplary manner. The end portion of the bellows being displaceable within a sleeve on an exhaust line creates the possibility of displacement in the axial direction and also the possibility of twisting and tilting within the sleeve. The pipe coupling need not adopt any space demanding S shape but merely has to bend into a C shape that need not be space-demanding.

The bellows and the sleeve thus combine to allow relative movement between them without leakage, since the tubular bellows bracket is arranged adjacent to the end of the bellows, has a convex outer shell surface and is provided with one or more peripheral recesses in which one or more seals are inserted, and an inner cylindrical shell surface is arranged adjacent to the sleeve and abuts against the aforesaid shell surface fastened to the bellows and bearing the aforesaid seals.

In an advantageous embodiment, piston rings are used for sealing between the steeve and the end portion of the bellows. These piston rings, which are inexpensive standard components, provide a very good seal against both gas release and noise release and at the same time allow good mobility between the constituent elements.

### Description of the drawings

Fig. 1 shows an engine with a pipe coupling according to the invention between a manifold and an exhaust pipe.

Fig.2 shows a side view of the pipe coupling of Fig. 1.

Fig.3 shows the pipe coupling of Fig.2 in perspective.

Fig. 4 A or B shows the pipe coupling of Fig.2 in detail and in an exploded view.

### Description of an embodiment

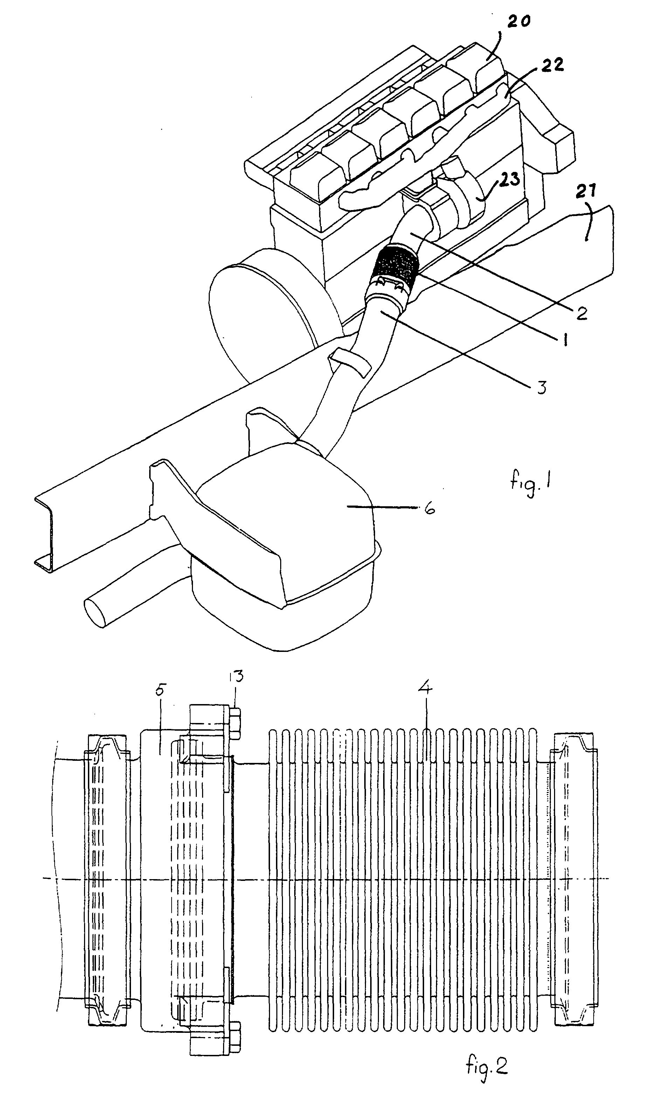

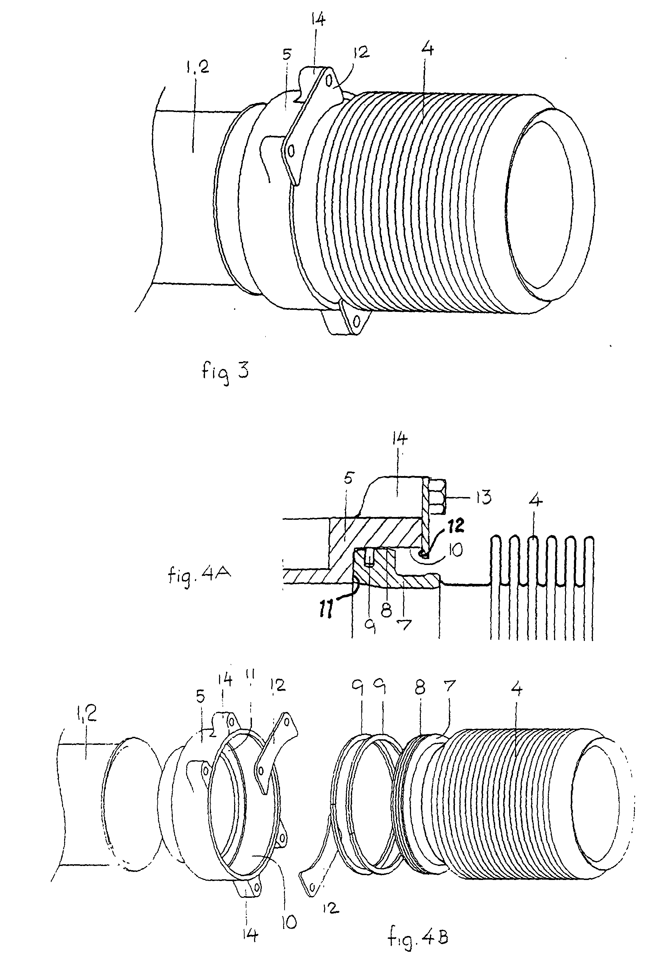

Fig.1 shows a vehicle engine 20 which, by a means not further described, is resiliently mounted on a vehicle frame, only one sidebeam 21 of which is depicted. A manifold 22 of the engine 20 is connected (via an exhaust turbine 23 and an exhaust pipe 2 which is fastened to the engine) to one end of a pipe coupling 1 according to the invention. The other end of the pipe coupling 1 is connected to an exhaust pipe 3 which is fastened to the frame and connected to an exhaust silencer 6 fastened to the frame. The pipe coupling 1 inserted between the exhaust pipe 2 fastened to the engine and the exhaust pipe 3 fastened to the frame is depicted in more detail in Figs. 2-4 and consists of a bellows 4 and a sleeve 5 which surrounds the end of the bellows. In this embodiment the bellows 4 is connected to the exhaust pipe 2 fastened to the engine, while the sleeve 5 is connected to the exhaust pipe 3 fastened to the frame. In an alternative embodiment the bellows 4 may be connected to the exhaust pipe 3 which is fastened to the frame and is connected to the silencer 6. The bellows may also be connected directly to an engine manifold 22, thereby reducing the transmission of carcass noise from the engine in a vehicle to the vehicle chassis but involving more expensive construction. In an alternative embodiment the sleeve 5 may be designed as part of a pipe support on the engine manifold 22 or on the exhaust pipe 2 fastened to the engine, thereby possibly in certain cases involving a less expensive design but increasing the transmission of carcass noise from the engine in a vehicle to the vehicle chassis. The bellows 4 has its free end connected to a circular bellows bracket 7, the convex outer shell surface 8 of which is provided with one or more grooves with space for one or more inserted seals 9 such as piston rings. The internal circular shell surface 10 of the sleeve 5 is arranged to act against the bellows bracket 7 and its seal or seals 9. To limit movement of the bellows bracket 7 in the sleeve 5, the sleeve has an internal substantially vertical stop surface 11 and an outer removable stop element 12 such as a lock washer fastened by screws 13 to the bracket on the sleeve. In the space between the internal vertical stop surface 11 and the outer stop element 12 the bellows bracket 7 can slide, twist or tilt when the engine vibrates, the length of the exhaust pipes changes and the frame lurches. Accordingly the pipe coupling 1 can absorb all the movements which may occur between the bellows 4 and the sleeve 5, e.g. during the operation of a vehicle, with leakage prevented by the seal present there.

The short C shape of the pipe coupling also makes it possible that no extra space is needed such as the previously mentioned S shape would require for achieving substantially the same results.

## Claims

1. Pipe coupling for pipe connection, between an exhaust pipe fastened to a vehicle engine and an exhaust pipe fastened to a vehicle frame whereby relative movement may occur between the pipe coupling and the exhaust pipes but tightness is required, which pipe coupling (1) includes a bellows (4) and a sleeve (5), both of which are capable of being connected to pipes, and the bellows exhibits a bellows bracket (7) with a seal (9) inserted in the latter's outer shell surface (8) and the sleeve exhibits an internal shell surface (10) acting against the surface sealingly so that relative movement can be permitted in the axial direction between the surfaces (8,10) without fluid being able to leak into or from the pipe coupling.
**characterised** in that the shell surface (8) of the bellows bracket is convex allowing the bellows bracket (7) to twist or tilt relative to the sleeve (5).

2. Pipe coupling according to patent claim 1,
**characterised** in that the inserted seal takes the form of one or more piston rings (9) inserted in grooves on the outer shell surface (8) of the bellows bracket.

3. Pipe coupling according to patent claim 1,
**characterised** in that the sleeve (5) is provided with an internal stop surface (11) and an external stop element (12) for limiting movement of the bellows bracket (7) within the sleeve.

4. Pipe coupling according to patent claim 1,
**characterised** in that the sleeve (5) takes the form of a pipe support on a manifold (2).

5. Pipe coupling according to patent claim 3,
**characterised** in that the external stop element takes the form of a lock washer (12) capable of being fastened to the sleeve by screws.

## Patentansprüche

1. Rohrkupplung für eine Rohrverbindung zwischen einem an einem Fahrzeugmotor befestigten Auspuffrohr und einem an einem Fahrzeugrahmen befestigten Auspuffrohr, wobei eine relative Bewegung zwischen der Rohrkupplung und den Auspuffrohren auftreten kann, aber Dichtigkeit erforderlich ist, wobei die Rohrkupplung (1) einen Balg (4) und eine Hülse (5) enthält, die beide mit Rohren verbunden werden können, und der Balg eine Balgschelle (7) mit einer in die äußere Mantelfläche (8) der letztgenannten eingesetzten Dichtung (9) aufweist und die Hülse eine innere Mantelfläche (10) aufweist, die gegen die Oberfläche dichtend wirkt, so daß eine relative Bewegung in der axialen Richtung zwischen den Mantelflächen (8, 10) zugelassen werden kann, ohne daß Fluid in die Rohrkupplung oder aus ihr lecken kann, dadurch **gekennzeichnet**, daß die Mantelfläche (10) der Balgschelle konvex ist, so daß die Balgschelle (7) in bezug auf die Hülse (5) bieg- oder neigbar ist.

2. Rohrkupplung nach Anspruch 1, dadurch **gekennzeichnet,** daß die eingesetzte Dichtung die Form eines oder mehrerer, in Rillen auf der äußeren Mantelfläche (8) der Balgschelle eingesetzter Kolbenringe (9) annimmt.

3. Rohrkupplung nach Anspruch 1, dadurch **gekennzeichnet,** daß die Hülse (5) mit einer inneren Anschlagfläche (11) und einem äußeren Anschlagelement (12) zum Begrenzen einer Bewegung der Balgschelle (7) innerhalb der Hülse versehen ist.

4. Rohrkupplung nach Anspruch 1, dadurch **gekennzeichnet,** daß die Hülse (5) die Form eines Rohrträgers auf einem Krümmer (22) annimmt.

5. Rohrkupplung nach Anspruch 3, dadurch **gekennzeichnet,** daß das äußere Anschlagelement die Form einer Verriegelungsscheibe (12) annimmt, die durch Schrauben an der Hülse befestigt werden kann.

## Revendications

1. Raccord de tuyaux pour une liaison de tuyaux entre un tuyau d'échappement fixé à un moteur de véhicule et un tuyau d'échappement fixé à un châssis de véhicule, un mouvement relatif pouvant se produire entre le raccord de tuyaux et les tuyaux d'échappement mais l'étanchéité est exigée, lequel raccord de tuyaux (1) comprend un soufflet (4) et un manchon (5), ces deux éléments pouvant être reliés à des tuyaux, et le soufflet présente un support de soufflet (7) comportant un joint d'étanchéité (9) inséré dans la surface d'enveloppe extérieure (8) de ce dernier, et le manchon présente une surface d'enveloppe interne (10) agissant contre la surface de manière étanche afin qu'un mouvement relatif puisse être permis dans la direction axiale entre les surfaces (8, 10), sans qu'un fluide puisse fuir dans le raccord de tuyaux ou de celui-ci, caractérisé en ce que la surface d'enveloppe (10) du support de soufflet est convexe ce qui permet au support de soufflet (7) de se déformer ou de basculer par rapport au manchon (5).

2. Raccord de tuyaux selon la revendication 1, caractérisé en ce que le joint d'étanchéité inséré prend la forme d'une ou de plusieurs bagues de piston (9) insérée(s) dans des rainures situées sur la surface d'enveloppe extérieure (8) du support de soufflet.

3. Raccord de tuyaux selon la revendication 1, caractérisé en ce que le manchon (5) est prévu avec une surface d'arrêt interne (11) et un élément d'arrêt externe (12) afin de limiter le mouvement du support de soufflet (7) à l'intérieur du manchon.

4. Raccord de tuyaux selon la revendication 1, caractérisé en ce que le manchon (5) prend la forme d'un support de tuyau situé sur un collecteur (2).

5. Raccord de tuyaux selon la revendication 3, caractérisé en ce que l'élément d'arrêt externe prend la forme d'une rondelle d'arrêt (12) qui peut être fixée au manchon à l'aide de vis.
